# EUROPEAN PATENT SPECIFICATION

(11) **EP 4 386 232 B1**
(45) Date of publication and mention of the grant of the patent: **29.04.2026**
(21) Application number: 22214239.0
(22) Date of filing: 16.12.2022
(51) Int. Cl.: F16H 25/22, F16D 65/14, F16D 65/18, F16H 25/20, F16D 121/24, F16D 125/40, F16D 125/64, F16D 125/48

(54) **ELECTRO-MECHANICAL ACTUATOR ASSEMBLY FOR ACTUATING A BRAKE ACTUATOR, BRAKE ASSEMBLY AND VEHICLE**
ELEKTROMECHANISCHE AKTUATORANORDNUNG ZUR BETÄTIGUNG EINES BREMSAKTUATORS, BREMSANORDNUNG UND FAHRZEUG
ENSEMBLE ACTIONNEUR ÉLECTROMÉCANIQUE POUR ACTIONNER UN ACTIONNEUR DE FREIN, ENSEMBLE FREIN ET VÉHICULE

(43) Date of publication of application: 19.06.2024
(73) Proprietor: KNORR-BREMSE Systeme für Nutzfahrzeuge GmbH, 80809 München (DE)
(72) Inventor: ADAMCZYK, Philipp, 82347 Bernried (DE); BLESSING, Michael, 80687 München (DE); GYÖRKE, Zsombor, 8360 Keszthely (HU); HEIGL, Korbinian, 85652 Pliening (DE); HÖS, Levente, 1047 Budapest (HU); HOLLOSI, Mate, 1097 Budapest (HU); KLINGNER, Matthias, 82275 Emmering (DE); KOKREHEL, Csaba, 1119 Budapest (HU); KRÜGER, Sven Philip, 81476 München (DE); MONORI, Gyula, 6065 Lakitelek (HU); NAKAMURA, Tatsuro, 1027 Budapest (HU); PESCHEL, Michael, 82296 Schöngeising (DE); TOTH, Janos, 6000 Kecskemét (HU); TOTH-KATONA, Tamas, 1039 Budapest (HU); SCHÖFBERGER, Tobias, 84048 Mainburg (DE); SZABO, Janos, 1101 Budapest (HU)

(56) References cited:
- JP-A- 2020 133 693
- US-A- 3 690 417
- US-A- 5 949 168
- US-A1- 2009 045 018
- US-A1- 2012 090 418
- US-A1- 2022 364 618
- US-B2- 7 311 180

## Description

The present invention relates to an electro-mechanical actuator assembly for actuating a brake actuator, a brake assembly comprising such electro-mechanical actuator assembly, and vehicle comprising such electro-mechanical actuator assembly or such brake assembly.

Pneumatic brake systems are widely utilized for commercial vehicle retardation. Floating caliper disc brakes are the most common foundation brake solutions within these systems for wheel end brake torque application. Pneumatic actuators are attached to these calipers via a simple flange and nuts. Thanks to this interface, these actuators can be exchanged on a modular way, supporting system setup for different brake performances based on the actuator power.

The electro-mechanical brake actuation principle is about to penetrate commercial vehicle market. Since the vehicle suspension and axle compartment together with the brake components is already given, the electro-mechanical brake actuation is limited in the degrees of freedom in design.

Further, brake calipers or braking members in general may be actuated by a brake actuator such as a rotating lever, wherein a specific contact surface or interface to receive an actuation, e.g. by a pushrod as part of an actuator assembly, moves along a curved trajectory due rotation of the rotating lever during a braking action. This may result in additional loads on the actuation mechanism.

In this context, US 2012/090418 A1 relates to a ball screw having a threaded nut which is arranged on a threaded spindle and having a stop for the circumferential abutment of the threaded nut in its stop position provided on the threaded spindle. The stop has a first stop surface assigned to the threaded nut and has a second stop surface which is provided for abutting against the first stop surface and which is assigned to the threaded spindle, and, in the stop position, an axial overlap of the first stop surface with the second stop surface is provided, which overlap amounts to between 20% and 85% of the pitch of the threaded spindle.

US 7 311 180 B2 relates to an electromechanically actuatable self-boosting disk brake in which a friction brake lining is guided displaceably with a guide whose angle to the brake disk is adjustable via an electric motor to attain brake reinforcement. The angle of the guide is adjusted independently of an actuating device with which the friction brake lining is pressed against the brake disk.

US 2009/045018 A1 discloses an ectro-mechanical actuator assembly for actuating a brake actuator, comprising: an actuation mechanism configured to convert a rotational driving movement into a translational driven movement in a direction of a first longitudinal axis, and a transfer mechanism operatively coupled to the actuation mechanism to receive and transfer the translational driven movement at least in the direction of the first longitudinal axis, wherein the transfer mechanism comprises at least one pushing member having a pushing member pivot portion configured to allow a tilting movement about a pivot axis inclined to the first longitudinal axis, wherein the transfer mechanism comprises a guiding device configured to at least partially receive and support the pushing member pivot portion and to translationally move the pushing member in accordance with the driven translational movement by the actuation mechanism.

It is an object of the present invention to allow the implementation of an electro-mechanical brake actuation with reduced loads on the actuation mechanism.

The object is solved by the subject matters of the independent claims. Further aspects of the present invention are subject to the dependent claims.

According to the present invention an electro-mechanical actuator assembly for actuating a brake actuator comprises an actuation mechanism configured to convert a rotational driving movement into a translational driven movement in a direction of a first longitudinal axis, and a transfer mechanism operatively coupled to the actuation mechanism to receive and transfer the translational driven movement at least in the direction of the first longitudinal axis. The transfer mechanism comprises at least one pushing member having a pushing member pivot portion configured to allow a tilting movement of the pushing member about a pivot axis inclined to the first longitudinal axis.

The pushing member is a push rod, axially driven by the actuation mechanism in the direction of the first longitudinal direction to move a brake actuator, such as a brake lever, in a braking direction. The brake actuator moved in the braking direction actuates a brake or braking member, such as a brake caliper, e.g. a floating caliper, to brake a brake disc. A brake lever as the brake actuator may thereby be rotated about a pivot axis extending in a direction inclined, particularly substantially perpendicular, to the first longitudinal axis, but not intersecting the first longitudinal axis and thereby distanced therefrom. The brake actuator and the pushing member may each comprise an engaging interface configured to engage with each other such
that the pushing member is engaged with the brake actuator during a braking movement. Since the brake actuator rotates about the pivot axis, the interface of the brake actuator moves along a curved trajectory. Accordingly, the pushing member in engagement with the brake actuator comprises a pushing member pivot portion to allow a tilting movement of the pushing member about a respective pivot axis inclined, particularly substantially perpendicular, to the first longitudinal axis. The pivot axis of the pushing member is preferably substantially in parallel to the pivot axis of the brake actuator. Here and in the following, the term "substantially" generally relates to tolerances in manufacturing and/or assembling as well as any other slight deviations that do not interfere with basic principles provided by respective configurations.

Due to the actuation mechanism configured to convert a rotational driving movement into a translational driven movement in the direction of the first longitudinal axis, and the transfer mechanism operatively coupled to the actuation mechanism to receive and transfer the translational driven movement at least in the direction of the first longitudinal axis, the actuation mechanism is capable of being retrofitted in a brake assembly when exchanging a linear drive with a rotary drive within a given brake actuator and/or brake configuration. Further the ability of the pushing member to provide a tilting movement allows to reduce loads on the pushing member, which may otherwise result in deformations or other damages of the pushing member or components subsequent thereof in a direction away from the brake actuator, and/or on the brake actuator.

Further, the transfer mechanism comprises a guiding device configured to at least partially receive and support the pushing member pivot portion and to translationally move the pushing member in accordance with the driven translational movement by the actuation mechanism.

Accordingly, the pushing member is translationally moved in the direction of the first longitudinal axis by the guiding device at least partially receiving and supporting the pushing member pivot portion to allow the tilting movement of the pushing member. For example, the guiding device may be of an annular shape arranged around the spindle and provides a contact surface for or is operatively connected to the spindle nut to be axially moved along the spindle in correspondence with a respective axial movement of the spindle nut. In other words, the spindle nut may not have to be configured to at least partially receive and support the pushing member pivot potion and a respective translational movement since the guiding device may be easily adapted to both, the pushing member and the spindle nut, similar to an adapter.

In some embodiments, the actuation mechanism is a spindle-spindle nut mechanism, preferably a recirculating ball spindle mechanism. A spindle of the spindle-spindle nut mechanism extends along the first longitudinal axis and is rotationally supported about the first longitudinal axis while being axially fixed. Further, the spindle nut is configured to be axially moveable with respect to the first longitudinal axis while being rotationally fixed.

For example, the spindle-spindle nut mechanism is a recirculating ball-spindle based actuator, wherein the spindle is extending in the direction of the first longitudinal axis, preferably coaxially therewith, and is rotationally supported by at least one spindle bearing to allow a rotational movement of the spindle about the first longitudinal axis or an axis in parallel to the first longitudinal axis but keeping the spindle axially stationary with respect to the direction of the first longitudinal axis. However, in other embodiments, the spindle-spindle nut mechanism may be another actuation mechanism configured to convert a rotational driving movement into a translational driven movement in a direction of a first longitudinal axis, such as a threaded mechanism. The spindle nut starts moving axially with respect to the first longitudinal axis by the rotational movement of the spindle. To prevent the spindle nut from rotating together with the spindle and being rotationally stationary, the spindle nut may comprise at least one spindle support pin projecting radially with respect to the first longitudinal axis. The at least one pin may be received in a guiding groove of a housing, in which the spindle nut is received, or of another stationary component. The guiding groove extends in the direction of the axial movement of the spindle nut. By the axial movement of the spindle nut, the transfer mechanism is also moved in the axial direction.

Preferably, the electro-mechanical actuator assembly further comprises an electro-mechanical linear actuator configured and controlled to lock the spindle against a rotational movement.

For example, the electro-mechanical linear actuator may be configured to be moved against the spindle to lock or brake the spindle against a rotational movement by providing a form fit and/or force fit connection. However, in other embodiments, such locking may be alternatively or in addition provided by another locking mechanism such as a pneumatic locking mechanism. By locking the spindle against a rotational movement, a force acting on the spindle nut in the axial direction with respect to the first longitudinal axis does not cause the spindle nut or the spindle to move.

Alternatively, an electro-mechanical actuator assembly for actuating a brake actuator comprises an actuation mechanism configured to convert a rotational driving movement into a translational driven movement in a direction of a first longitudinal axis, and a pushing member operatively coupled to the actuation mechanism to receive and transfer the translational driven movement at least in the direction of the first longitudinal axis, wherein the actuation mechanism is a spindle-spindle nut mechanism, wherein a spindle nut of the actuation mechanism is rotationally supported about the first longitudinal axis while being axially fixed, and wherein a spindle of the actuation mechanism is configured to be axially moveable with respect to the first longitudinal axis while being rotationally fixed.

For example, the pushing member is axially driven by the actuation mechanism in the direction of the first longitudinal direction to move a brake actuator, such as a brake lever, in a braking direction. The brake actuator moved in the braking direction actuates a brake or braking member, such as a brake caliper, e.g. a floating caliper, to brake a brake disc. Since the spindle is not rotationally moveable but axially moveable by the rotation of the spindle nut to actuate the brake actuator via the pushing member, constructional and/or dynamic requirements with respect to the spindle may be reduced.

The term "operatively connected" or "operatively coupled" refers to a direct or indirect connection or coupling. For example, an indirect connection or coupling may comprise at least one intermediate component, e.g. to bridge distances and/or to provide flexible interfaces, arranged between the members to be operatively connected coupled. Accordingly, any described coupling of the pushing member to the spindle is also transferable to a coupling of the pushing member to at least one intermediate component, which is in turn operatively coupled to the spindle. For example, with respect to the pushing member being operatively connected to the spindle, the pushing member may be directly coupled to the spindle by a fixing member, such as a fixing O-ring, or indirectly coupled to the spindle by being coupled to the at least one intermediate component by such fixing member.

In some embodiments, wherein the spindle nut is rotationally driven to move the spindle axially, the spindle-spindle nut mechanism may also comprise a ball screw. For example, the spindle-spindle nut mechanism is a recirculating ball-spindle based actuator, wherein the spindle is extending in the direction of the first longitudinal axis, preferably coaxially therewith, and may be supported by the spindle nut for an axial movement of the spindle along the first longitudinal axis or an axis in parallel to the first longitudinal axis but keeping the spindle rotationally stationary with respect to the direction of the first longitudinal axis. The spindle starts moving axially with respect to the first longitudinal axis by the rotational movement of the spindle nut. To prevent the spindle from rotating together with the spindle nut and being rotationally stationary, the spindle may comprise at least one spindle support pin projecting radially with respect to the first longitudinal axis. The at least one pin may be received in a guiding groove of a housing, in which the spindle is received, or of another stationary component. The guiding groove extends in the direction of the axial movement of the spindle. By the axial movement of the spindle, the pushing is also moved in the axial direction. However, in other embodiments, the spindle-spindle nut mechanism may also be another actuation mechanism configured to convert a rotational driving movement into a translational driven movement in a direction of a first longitudinal axis, such as a threaded mechanism.

Preferably, the electro-mechanical actuator assembly further comprises an electro-mechanical linear actuator configured and controlled to lock the spindle nut against a rotational movement.

For example, the electro-mechanical linear actuator may be configured to be moved against the spindle nut to lock or brake the spindle nut against a rotational movement by providing a form fit and/or force fit connection. However, in other embodiments, such locking may be alternatively or in addition provided by another locking mechanism such as a pneumatic locking mechanism. By locking the spindle nut against a rotational movement, a force acting on the spindle in the axial direction with respect to the first longitudinal axis does not cause the spindle or the spindle nut to move.

In some embodiments with respect to the rotationally driven spindle nut, the spindle nut is rotationally supported about the first longitudinal axis by at least one bearing arranged at a radial outer surface of the spindle nut.

Due to a braking operation with the pushing member being in engagement with the brake actuator, a force is applied on the pushing member and therefore other subsequent components operatively connected thereto. In particular, since the pushing member may be tilted or at least affected by forces in engagement with the brake actuator by the brake actuator being particularly moved on a curved trajectory, respective forces or force components, respectively, may act on the pushing member and, for example, the spindle and subsequently the spindle nut. Accordingly, the at least one bearing arranged at a radial outer surface, i.e. extending at least partially around an outer radial circumference, of the spindle nut may absorb such forces while guiding the axial movement of the guiding device. The at least one bearing may therefore be supported radially inside a housing at least partially accommodating the spindle nut. Due to the force absorption by the at least one bearing, respective forces may not have sufficient influence to cause deformations or other damages.

For example, the spindle nut is rotationally supported about the first longitudinal axis by at least one spindle nut fixed bearing and at least one spindle nut loose bearing arranged at a radial outer surface of the spindle. Both bearings may be deep-grooved ball bearings, which are also capable of carrying axial forces. Preferably, the spindle nut fixing bearing is configured to carry the axial force transmitted from the pushing member. The at least one bearing, for example, the spindle nut fixing bearing, may also be a combination of more than one bearing, such as an axial thrust ball bearing and one further radial bearing of any kind. In other words, the at least one bearing is configured to take up the axial forces by being provided as a single bearing or a combination of bearings, which provide axial and radial force support.

In some embodiments with respect to the rotationally driven spindle nut, in the direction of the first longitudinal axis, an end portion of the spindle comprises a spindle recess, preferably in a conical shape tapered from the opening of the spindle recess to the closed end of the spindle recess, configured to at least partially receive the pushing member, wherein the pushing member is preferably operatively connected to the spindle within the spindle recess.

Accordingly, the pushing member at least partially extends into the spindle to allow a more compact design in the direction of the first longitudinal axis. Due to the conical shape of the spindle recess, the spindle recess may provide a centering capability for the pushing member and/or may provide a predetermined tilting capability for the pushing member within the spindle, as described later.

In some embodiments with respect to the rotationally driven spindle nut, the spindle is supported by the spindle nut and/or at least one bearing member over a predetermined support section in the direction of the first longitudinal axis, preferably a predetermined support section at least partially corresponding to a predetermined actuation movement of the spindle for an actuating a brake actuator, and wherein the spindle recess extends in the direction of the first longitudinal axis such that a bending force transmission from the pushing member to the spindle substantially occurs within the predetermined support section.

During a braking operation, the pushing member may transfer bending forces or a bending torque, respectively, on the spindle. By supporting the spindle by the spindle nut and/or at least one bearing member over the predetermined support section, a respective effect on the spindle may be reduced. In particular, the predetermined support section at least partially corresponding to a predetermined actuation movement of the spindle for an actuating a brake actuator allows to support the spindle over at least partially over normal brake operating procedures. The predetermined support section may specifically correspond to a predetermined actuation movement with expectable bending forces equal to or above a predetermined threshold.

In accordance with the above, the spindle recess extends in the direction of the first longitudinal axis such that a bending force transmission from the pushing member to the spindle substantially occurs within the predetermined support section, in which the spindle is sufficiently supported.

Further, with the pushing member further extending in the spindle, the deflection angle of the pushing member with respect to the first longitudinal axis for the same actuation of the brake actuator and therefore the bending forces are allowed to be decreased. In other words, the more the pushing member extends into the spindle, the less the deflection angle. For example, the pushing member may extend within the spindle recess at least beyond the pivot axis of the brake actuator in the direction away from the brake actuator in the direction of the first longitudinal axis. Alternatively or in addition, the length of the pushing member within the spindle recess is determined such that the pivot axis of the pushing member is located within the predetermined support section, for example, between two bearings axially arranged along the spindle nut, at least at a maximum stroke force or maximum actuator force, respectively, or at a respective force range exceeding a predetermined threshold acting from the pushing member on the spindle.

In some embodiments, the spindle is operatively connected to a driving device, preferably an electric motor, to be driven by the driving device directly or via at least one gear stage arranged between the driving device and the spindle.

Accordingly, the driving device, specifically a rotary driving device, drives the spindle to rotate to axially drive the spindle nut. The driving device may be directly or indirectly connected to the spindle. In this context but also in general, the term "operatively connected" or "operatively coupled" refers to a direct or indirect connection or coupling. For example, an indirect connection or coupling may comprise at least one intermediate component, e.g. to convert a movement and/or to bridge distances, arranged between the members to be operatively connected coupled. With respect to the spindle being operatively connected to the driving device, at least one gear stage may be arranged between the driving device and the spindle. The at least one gear stage may allow to convert a rotational speed of the driving device into a different rotational speed of the spindle. Preferably, the at least one gear stage is configured to lower the rotational speed of the spindle with respect to the rotational speed of the driving device. With the driving device being or at least comprising an electric motor, driving of the spindle can be implemented in an easy manner.

In the alternative embodiment with respect to the spindle nut being rotationally driven to move the spindle axially, the spindle nut is operatively connected to a driving device, preferably an electric motor, to be driven by the driving device directly or via at least one gear stage arranged between the driving device and the spindle nut.

Accordingly, the driving device, specifically a rotary driving device, drives the spindle nut to rotate to axially drive the spindle. The driving device may be directly or indirectly connected to the spindle nut. In this context but also in general, as previously stated, the term "operatively connected" or "operatively coupled" refers to a direct or indirect connection or coupling. For example, an indirect connection or coupling may comprise at least one intermediate component, e.g. to convert a movement and/or to bridge distances, arranged between the members to be operatively connected or coupled. With respect to the spindle nut being operatively connected to the driving device, at least one gear stage may be arranged between the driving device and the spindle nut. The at least one gear stage may allow to convert a rotational speed of the driving device into a different rotational speed of the spindle nut. Preferably, the at least one gear stage is configured to lower the rotational speed of the spindle nut with respect to the rotational speed of the driving device. With the driving device being or at least comprising an electric motor, driving of the spindle can be implemented in an easy manner.

In some embodiments, the driving device comprises a driving device shaft extending in a direction of a second longitudinal axis, preferably in parallel to the first longitudinal axis.

The second longitudinal axis may be coaxially aligned with the first longitudinal axis, for example in series with the spindle. However, due to spatial constraints for installation or to reduce the size of the electro-mechanical actuator assembly in the direction of the first longitudinal axis, the driving device shaft and therefore the second longitudinal axis may be arranged to extend in parallel to the first longitudinal axis. In such configuration the driving device shaft and the spindle may be operatively coupled via the at least one gear stage, wherein the at least one gear stage may only be provided to transfer the rotational movement of the driving device shaft to the spindle with the same rotational speed but may alternatively convert the rotational speed.

In some embodiments, the driving device shaft at least partially overlaps the spindle in the direction of the second longitudinal axis.

By the driving device shaft and the spindle at least partially overlapping, the installation space can be reduced in the direction of the first longitudinal axis resulting in a compact design in such direction. For example, the first longitudinal axis and the second longitudinal axis are arranged in parallel to each other. Further, the driving device shaft and the spindle are arranged such that the shorter one of the driving device shaft or the spindle is not extending beyond the longer one of the driving device shaft or the spindle with respect to the first longitudinal axis or the second longitudinal axis, respectively. For the driving device shaft and the spindle being substantially equal in length with respect to the respective first and second longitudinal axis, preferably none of the driving device shaft and the spindle is extending beyond the other one. The first longitudinal axis and the second longitudinal axis may be arranged to extend in a horizontal plane or a vertical plane upon being installed.

In some embodiments, the electro-mechanical actuator assembly further comprises a locking unit, preferably an electro-mechanical linear actuator or a locking clutch, more preferably a bi-stable brake, configured and controlled to lock the driving device shaft against a rotational movement.

With respect to the spindle being rotationally driven, by locking the driving device shaft, any unintentional movement of the spindle may be prevented. In turn, any rotational movement of the spindle does not cause the driving device shaft operatively connected to the spindle to rotate, which may affect the driving device.

With respect to the spindle nut being rotationally driven, by locking the driving device shaft, any unintentional movement of the spindle nut may be prevented. In turn, any rotational movement of the spindle nut does not cause the driving device shaft operatively connected to the spindle nut to rotate, which may affect the driving device.

The locking unit is preferably configured to lock by a form fit connection.

Specifically, the locking unit is configured as a parking brake, specifically a parking brake clutch, coupled to the driving device shaft to lock the driving device rotation in a predetermined position. Preferably, the brake is pretensioned in the predetermined position, so that a parking brake function is realized.

In some embodiments, the guiding device comprises at least one axial bearing arranged at a radial outer surface of the guiding device and configured for a guided axial movement of the guiding device with respect to the first longitudinal axis.

Due to a braking operation with the pushing member being in engagement with the brake actuator, a force is applied on the pushing member and therefore other subsequent components operatively connected thereto. In particular, since the pushing member is tilted in engagement with the brake actuator by the brake actuator being moved on a curved trajectory, respective forces or force components, respectively, may act on the pushing member and, for example, the guiding device. Further, the actuation of a brake by the brake actuator may cause respective reaction forces. Specifically, axial forces may therefore occur. Accordingly, the at least one axial bearing arranged at a radial outer surface, i.e. extending at least partially around an outer radial circumference, of the guiding device may absorb axial forces while guiding the axial movement of the guiding device. The at least one axial bearing may therefore be supported radially inside a housing at least partially accommodating the spindle. Due to the force absorption by the at least one axial bearing, axial forces may not have sufficient influence to cause deformations or other damages on the spindle. Accordingly, the spindle design may be optimized without taking care about potential axial forces transferred via the pushing member. Further, the axial bearing or another bearing may also be provided with respect to radial forces.

The present invention is not limited to concrete axial bearings. Here, any bearing capable of supporting axial forces may be understood as axial bearing. However, concrete axial bearings may be advantageous to increase the capability of a respective support.

According to the invention, the pushing member comprises a pushing member body with one end comprising the pushing member pivot portion and an opposed end comprising a pushing member head, preferably an exchangeable and/or at least partially spherical
pushing member head, configured to engage with a brake actuator for a respective actuation of the brake actuator.

Accordingly, the pushing member extends along a pushing member longitudinal axis from the one end comprising the pushing member pivot portion to the other end comprising the pushing member head. For example, the pushing member longitudinal axis may be coaxially with the first longitudinal axis, and the pushing member body extends at least partially circumferentially around the spindle. The pushing member pivot portion may therefore comprise an opening to receive the spindle. Further, the pushing member head may be at least partially of a spherical shape, e.g. a positive hemisphere configured to be received by a corresponding negative hemisphere portion of the brake actuator to receive the pushing member head for engagement. Due to the spherical interface the contact surfaces of the positive hemispherical pushing member head and the negative hemispherical portion of the brake actuator may slide on each other during the movement along the curved trajectory without blocking such movement. However, the pushing member head is not restricted to a hemispherical shape and may provide another shape in accordance with the receiving portion of the brake actuator for an engagement with the pushing member head. Accordingly, it may be advantageous to allow the pushing member head to be exchanged to adapt the pushing member head with respect to different shapes and/or dimensions.

In some embodiments, the pushing member pivot portion comprises at least one pushing member pivot configured as a cylinder portion and/or a spherical portion.

For example, the pushing member pivot formed as a cylinder portion may be received in a corresponding cylinder support allowing the pushing member to rotate about the cylinder axis. The cylinder portion may be formed by a cylinder or at least a section of a cylinder sufficient to allow a predetermined tilting movement of the pushing member. The at least one cylinder portion may extend in the radial direction outward from the pushing member pivot portion with respect to the pushing member longitudinal axis. Preferably, the pushing member pivot portion comprises at least two pushing member pivots as cylinder portions evenly distributed along the radial surface of the pushing member pivot portion with respect to the pushing member longitudinal axis. Due to the at least two pushing member pivots as cylinder portions, the pushing member may be more stably supported.

Alternatively or in addition, the pushing member pivot may comprise a spherical portion forming a ball joint or at least a ball joint section. Accordingly, the spherical portion may only be partially spherical. Due to the ball joint or ball joint section, respectively, the degrees of freedom for a tilting movement may be increased. In particular, the pushing member may thereby be rotatable in any direction as long as not interfering with other components. The spherical portion may be formed with the pushing member longitudinal axis as symmetry axis.

In some embodiments, the guiding device as previously described and/or the spindle nut as previously described are/is configured to receive and support the at least one pushing member pivot for the tilting movement of the pushing member.

Accordingly, the guiding device and/or the spindle nut may comprise at least one pushing member pivot receiving portion, such as a recess or another corresponding contour, to receive and support the at least one pushing member pivot.

In some embodiments, the guiding device comprises a first guiding device member and a second guiding device member, wherein the first guiding device member and the second guiding device member are connectable to each other to support the at least one pushing member pivot for the tilting movement of the pushing member.

Accordingly, the pushing member receiving portion may be formed by connecting the first guiding device member and the second guiding device member. For example, the second guiding device member may comprise a cylindrical pin extending radial outward with respect to the pushing member longitudinal axis and the pushing member pivot is formed as a half-cylindrical arc with the inner contour of the arc corresponding to the outer contour of the cylindrical pin. The half-cylindrical arc is placed on the cylindrical pin, and the first guiding member is connected to the second guiding device member. The first guiding device member may comprise at least one first guiding device member recess in the outer circumference extending in the axial direction, wherein a closed end of the first guiding device member recess provides a contour corresponding to the outer contour of the half-cylindrical arc. The first and second guiding device members are configured and connected such that the half-cylindrical arc of the pushing member pivot is sandwiched between the cylindrical pin of the second guiding device member and the closed end of the first guiding device member. This allows a simplified assembling. Further, splitting the guiding device into at least the first guiding device member and the second guiding device member may also allow an exchange of the pushing member and/or the adaption to different pushing members.

Alternatively or in addition, the pushing member pivot is held in the pushing member receiving portion of one of the first and second guiding device members by connecting the other one of the first and second guiding device members to the one of the first and second guiding device members.

In some embodiments, the electro-mechanical actuator assembly further comprises at least one control device, preferably at least one electronic control unit.

In some embodiments, the driving device shaft and the spindle extend substantially in one plane, and the at least one control device, preferably at least one electronic control device is arranged laterally to the plane and operatively connected to the driving device and/or the locking unit as previously described.

Accordingly, the control device is placed sidewise on the electro-mechanical actuator assembly. This allows the installation space to be further reduced in the direction of the first longitudinal axis.

In some embodiments, the electro-mechanical actuator assembly comprises at least two control devices arranged on opposite sides of the plane.

For example, the control devices may thereby form a control unit spilt in two parts. The control devices may be arranged that the electro-mechanical actuator assembly remains quasi-symmetric. Preferably the symmetry plane of the arrangement of the control devices corresponds to a brake caliper symmetry plane. The brake caliper symmetry plane is a symmetry plane substantially perpendicular to plane in which the braking surfaces of the brake caliper extend or a braking plane, respectively.

In some embodiments, at least one of the at least two control devices is a control unit configured to control operatively connected components, and the other at least one of the at least two control devices is a power control unit configured to control a power supply to operatively connected components.

Accordingly, in the event of any failure of one of the at least two control devices, a redundancy to provide respective back-up functionalities may be easier implemented by separating types of functionalities to be assigned to one of the control devices or the other.

According to another aspect, the present invention relates to a brake assembly, comprising at least one electro-mechanical actuator assembly as previously described, and at least one brake actuator configured to actuate or release a brake upon being actuated by the electro-mechanical actuator assembly.

As previously described, the at least one brake actuator may be a brake lever to pivot about a pivot inclined, preferably substantially perpendicular, to the first longitudinal axis.

In some embodiments, the brake assembly further comprises a brake caliper actuatable by the at least one brake actuator, wherein the at least one brake caliper provides a braking plane extending in a direction substantially perpendicular to a braking movement, and wherein the at least one electro-mechanical actuator assembly is arranged with the first longitudinal axis substantially perpendicular to the braking plane, preferably in the brake caliper symmetry plane, with the at least one brake actuator disposed between the at least one electro-mechanical actuator assembly and the brake caliper. The braking plane corresponds to the plane in which the braking surfaces of the brake caliper extend.

Any feature described with respect to the electro-mechanical actuator assembly is also applicable to the brake assembly. In turn, any feature described for the brake assembly is also applicable to the electro-mechanical actuator assembly.

According to another aspect, the present invention relates to a vehicle comprising at least one electro-mechanical actuator assembly as previously described and/or a brake assembly as previously described, wherein the vehicle is a commercial vehicle and/or an electrically powered or hybrid vehicle.

For example, the commercial vehicle may be a truck, a trailer, a bus and/or a combination of a towing vehicle and a trailer. Commercial vehicles and electrically powered or hybrid vehicles provide severe installation space constraints, which benefit from the previously described electro-mechanical actuator assembly and/or brake assembly.

Further advantages, aspects and details of the invention are subject to the claims, the following description of exemplary embodiments applying the principles of the invention, and the respective exemplary drawings.
**Figure 1** is a schematic cross-sectional top view of a brake assembly and an electro-mechanical actuator assembly according to an exemplary embodiment of the present invention;
**Figure 2** is a schematic lateral view of a pushing member according to an exemplary embodiment of the present invention;
**Figure 3** is a schematic top view of the pushing member according to Figure 2;
**Figure 4** schematic lateral view of a guiding device according to an exemplary embodiment of the present invention;
**Figure 5** is a schematic cross-sectional top view of the pushing member according to another exemplary embodiment of the present invention;
**Figure 6** is a schematic rear view of a brake assembly according to an exemplary embodiment of the present invention; and
**Figure 7** is a schematic cross-sectional lateral view of a brake assembly and an electro-mechanical actuator assembly according to another exemplary embodiment of the present invention.

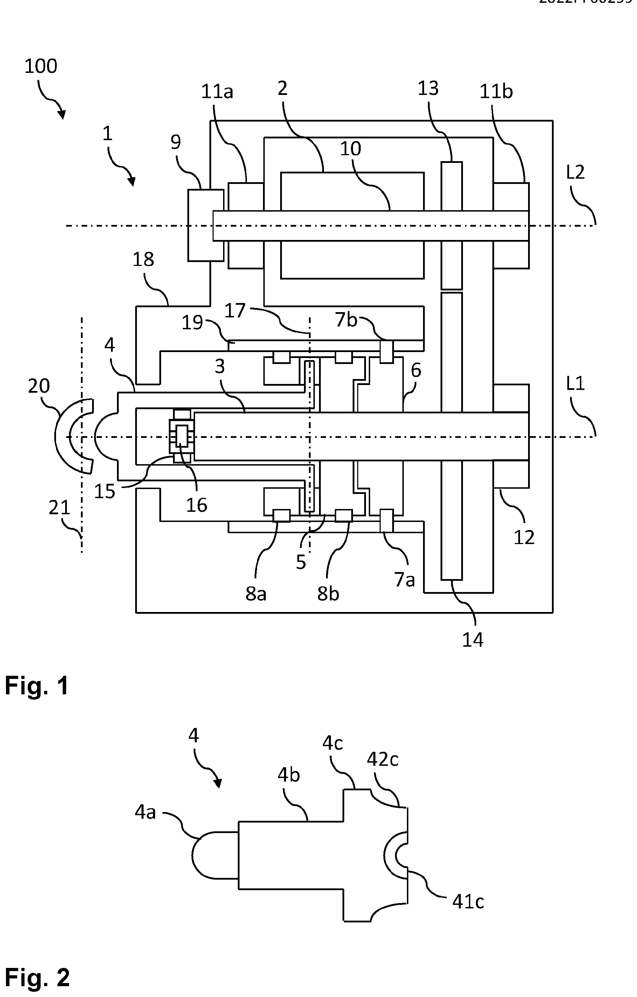

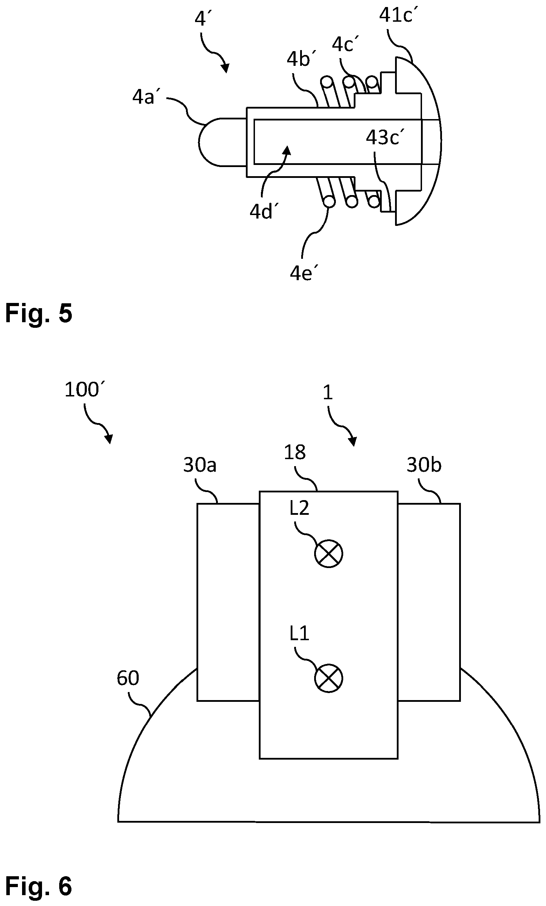

**Figure 1** shows a schematic cross-sectional top view of a brake assembly 100 and an electro-mechanical actuator assembly 1 according to an exemplary embodiment of the present invention. In Fig. 1, only the electro-mechanical actuator assembly 1 and a brake lever 20 as exemplary brake actuator are shown to be comprised by the brake assembly 100. However, other components may also be comprised by the brake assembly, as, for example, a brake caliper 60 (Fig. 6).

The electro-mechanical actuator assembly 1 comprises a spindle 3 and a spindle nut 6 configured as a recirculating ball spindle mechanism as an exemplary embodiment of an actuation mechanism configured to convert a rotational driving movement into a translational driven movement in a direction of a first longitudinal axis L1. The first longitudinal axis L1 corresponds to the longitudinal axis of the spindle 3. The spindle 3 is driven by an electric motor 2 as driving device comprising a motor shaft 10 as driving device shaft. The motor shaft 10 extends in a direction along a second longitudinal axis L2. The first longitudinal axis L1 is parallel to the second longitudinal axis L2. Further, the motor shaft 10 and the spindle 3 respectively arranged in parallel to each other are positioned such that the shorter motor driving shaft 10 does not extend with one end beyond the spindle 3 to achieve a compact design in the direction of the first longitudinal axis L1 or the second longitudinal axis L2, respectively. In principle, for a compact design, the motor shaft 10 and the spindle 3 are preferably arranged to require minimum space in the direction of the first longitudinal axis L1 or the second longitudinal axis L2, respectively. To drive the spindle 3 by the electric motor 2, the motor shaft 10 comprises a drive gear 13 extending radially with respect to the second longitudinal axis L2, and the spindle 3 comprises a driven gear 14 extending radially with respect to the first longitudinal axis L1. The drive gear 13 and the driven gear 14 are positioned along the motor shaft 10 and the spindle 3, respectively, such that they are in engagement with each other to form a gear stage. In the exemplary embodiment, the gear stage is configured to convert the rotational speed of the motor shaft 10 in a lower rotational speed of the spindle.

The electric motor 2 and the motor shaft 10 are accommodated in a housing 18. The motor shaft 10 is rotationally supported in the housing 18 by motor shaft bearing 11a, 11b, each of which is disposed on one end of the motor shaft 10. Further, the motor shaft 10 can be locked against a rotational movement by a bi-stable brake 9 as locking unit.

The spindle 3 is also accommodated in the housing 18, and rotationally supported by a spindle bearing 12 and a spindle support bearing 15. The bearings 12, 15 are configured to allow the spindle 3 to rotate but prevent the spindle 3 from an axial movement with respect to the first longitudinal axis L1. While the spindle bearing 12 at a driven end of the spindle 3 is directly supported in the housing 18, the spindle support bearing 15 requires a stationary spindle support bearing support 16, here, to bridge the distance between the housing 18 and the spindle support bearing 15 in a direction perpendicular to the drawing plane.

The spindle nut 6 is configured to be axially moved by the spindle 3 with respect to the first longitudinal axis L1. To prevent the spindle nut 6 from a rotational movement, the spindle nut 6 comprises two support pins 7a, 7b extending radially outward in opposing directions from the spindle nut 6 with respect to the first longitudinal axis L1. The support pins 7a, 7b extend into a respective guiding groove 19 to guide the support pins 7a, 7b and thereby the spindle nut 6 during an axial movement in the axial movement direction, while preventing the spindle nut 6 to rotate.

The electro-mechanical actuator assembly 1 further comprises a guiding device 5 and a pushing member 4 as transfer mechanism to receive and transfer the translational driven movement of the spindle nut 6 at least in the direction of the first longitudinal axis L1. Starting from the driven end of the spindle 3 toward the opposed end of the spindle 3 as downstream direction, the guiding device is arranged downstream of the spindle nut 6. The guiding device 5 forms an annular member extending around the spindle 3, and supports the pushing member 4 tiltably connected to the guiding device 5 to be pivotably about a pivot axis 17. The pivot axis 17 is perpendicular to the first longitudinal axis L1 and intersects the first longitudinal axis L1. The pushing member 4 projects from the guiding device 5 in the downstream direction.

The pushing member 4 is intended to engage with the brake lever 20 of the brake assembly 100. In the cross-sectional top view, Figure 1 shows the receiving portion of the brake lever 20 formed in a spherical shape. The brake lever 20 extends in the drawing plane and is pivotable about a pivot axis 21, which is perpendicular to the first longitudinal axis L1 and in parallel to the pivot axis 17 of the pushing member 4. Even though Figure 1 may provide the impression that the pivot axis 21 is intersecting the first longitudinal axis L1, this is merely due to the two-dimensional illustration, while the pivot axis 21 actually extends in a plane below the first longitudinal axis L1 with respect to the drawing plane.

The guiding device 5 is supported in the housing 18 by two axial bearings 8a, 8b, which are arranged at the outer circumference of the guiding device 5 to extend radially around the guiding device 5 with respect to the first longitudinal axis L1.

For a braking operation, the electric motor 2 drives the spindle 3 via the motor shaft 10 and the gear stage 13, 14 to rotate. Accordingly, the spindle nut 6 is translationally moved in a downstream axial direction with respect to the first longitudinal axis L1. Thereby, the guiding device 5 and therefore the pushing member 4 are also moved in the downstream axial direction by the spindle nut 6. Due to the downstream axial movement, the pushing member 4 engages the brake lever 20. Upon a further movement of the pushing member 4 in the downstream axial direction, the brake lever 20 is pivoted about the pivot axis 21 and thereby the contact surface between the brake lever 20 and the pushing member 4 follows a curved trajectory, wherein the pushing member 4 is tilted about the pivot axis 17.

**Figure 2** shows a schematic lateral view of the pushing member 4 according to an exemplary embodiment of the present invention. The pushing member 4 comprises a pushing member body 4b extending in a longitudinal direction from a pushing member head 4a to an opposed pushing member pivot portion 4c. In an assembled state of the electro-mechanical actuator assembly 1, the longitudinal axis of the pushing member body 4b can be brought coaxially with the first longitudinal axis L1. The pushing member head 4a provides a shape and thereby outer contour which corresponds to the receiving portion of the brake lever 20, here, a spherical shape, specifically a hemispherical shape. Since the contour of the receiving portion of the brake lever 20 may change in shape and/or contour in a different brake assembly and/or for other reasons for exchanging the pushing member head 4a, the pushing member head 4a according to the present embodiment is releasable attachable to the pushing member body 4b. However, in other embodiments, the pushing member head 4a may be integrally formed with the pushing member body 4b. For a releasable attachment, the pushing member head 4a is screwed on the pushing member main body 4b. In other embodiments, the pushing member head 4a may be clamped on the pushing member body 4b or may be releasable attached by any other form fit and/or force fit connection.

The pushing member pivot portion 4c comprises two pushing member pivots 41c to form pivots to allow the pushing member 4 to tilt about the pivot axis 17. In the exemplary embodiment, the pushing member pivots 41c are formed as a cylindrical section, specifically a cylindrical arc section. As per the lateral view only one of the pushing member pivots 41c is visible in Figure 2. However, the other pushing member pivot 41c is opposed to the visible pushing member pivot 41c. The pushing member pivot portion 4c further comprises two pushing member pivot recesses 42c configured to allow a predetermined tilting without interfering with another component. In the exemplary embodiment, the pushing member pivot recesses 42c are formed by semicircular cutouts in the pushing member pivot portion 4c. The pushing member pivot recesses 42c are offset from the pushing member pivots 41c in the radial direction with respect to the longitudinal axis by 90°. In other embodiments, the offset may differ from 90°.

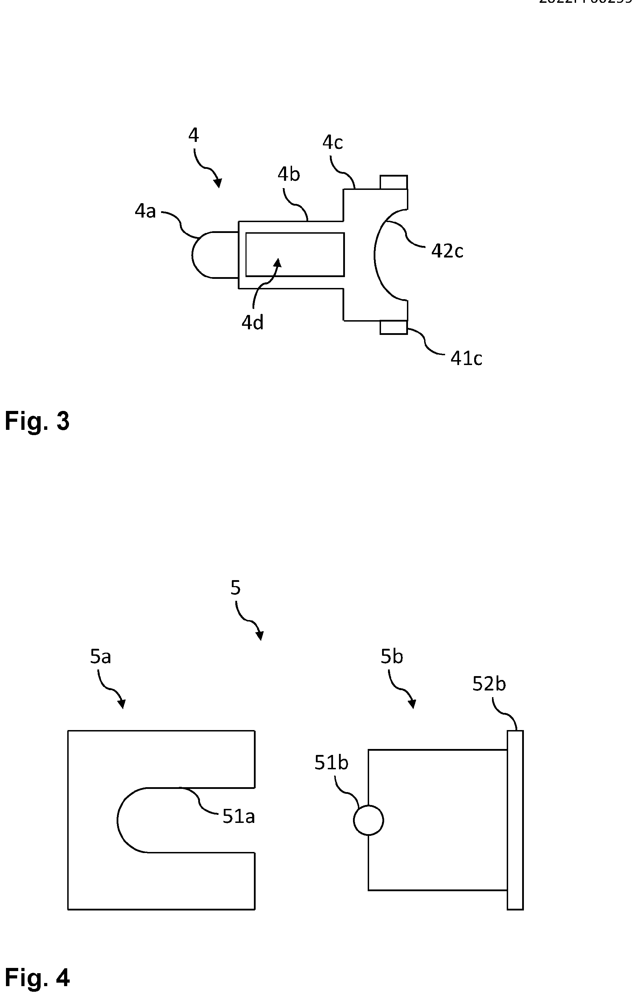

**Figure 3** shows a schematic top view of the pushing member according to Figure 2. According to the top view, the pushing member 4 further comprises a pushing member opening 4d. As per the exemplary embodiment, the pushing member 4 is formed to allow the spindle 3 to at least partially extend in an inner space of the pushing member 4. Further, the pushing member 4 can be moved relatively to the spindle 3 in the axial direction. To support the spindle 3 by the spindle support bearing 15, the pushing member opening 4d allows the spindle support bearing support 16 to extend in the inner space of the pushing member 4 to support the spindle support bearing 15.

**Figure 4** shows a schematic lateral view of the guiding device 5 according to an exemplary embodiment of the present invention. The guiding device 5 comprises a first guiding device member 5a and a second guiding device member 5b. Each of the first and second guiding device members is substantially formed in a hollow cylindrical shape with an inner diameter allowing the spindle 3 to extend therethrough. In the exemplary embodiment, the first and second guiding device member 5a, 5b are configured to receive and support the pushing member 4 according to Figures 2 and 3. The first guiding device member 5a comprises two opposed first guiding device member recesses 51a extending in the direction of the first longitudinal axis L1, when assembled. One end of the first guiding device member recesses 51a is open, while the closed end is formed in a hemispherical shape to correspond to the outer contour of the cylindrical pushing member pivots 41c. The second guiding device member 5b comprises two radially outwardly projecting second guiding device member pivots 51b opposed to each other. The second guiding device member pivots 51b are provided as cylindrical pins with an outer diameter corresponding to the inner contour of the cylindrical pushing member pivots 41c. The second guiding device member further comprises a radially outward projecting rim as a second guiding device member abutment 52b to allow the first guiding device member 5a to abut against the second guiding device member abutment 52b when connected to the second guiding device member 5b in a final position. Accordingly, the cylindrical pushing member pivots 41c as per Figure 2, are allowed to be sandwiched between the second guiding device member pivots 51b and the first guiding device member recesses 51a in a connected state of the first and second guiding device members 5a, 5b.

**Figure 5** shows a schematic cross-sectional top view of the pushing member 4' according to another exemplary embodiment of the present invention. The description of the features of the embodiment according to Figures 2 and 3 also applies here for the pushing member head 4a', the pushing member body 4b' and the pushing member opening 4d'. However, the present embodiment according to Figure 5 differs in the pushing member pivot portion 4c'. The pushing member pivot portion 4c' comprises a pushing member pivot 41c', which is formed as a spherical portion forming a ball joint or at least a ball joint section. The spherical portion is formed with the pushing member longitudinal axis as symmetry axis. The pushing member pivot 41c' is releasable attachable to the pushing member pivot portion 4c'. The pushing member pivot portion 4c' further comprises a pushing member abutment 43c' formed as a radially outwardly projecting rim with respect to the longitudinal axis of the pushing member 4'. A spring member 4e' of the pushing member is configured to be arranged between the abutment and another opposed support, here, a radially extending rim of a guiding device, in which the pushing member 4' is at least partially to be received. Accordingly, the pushing member pivot 41c' is biased in the longitudinal direction of the pushing member 4' to be in contact with a supporting surface of a guiding device or the spindle nut 6 for a tilting movement along the supporting surface.

**Figure 6** shows a schematic rear view of a brake assembly 100' according to an exemplary embodiment of the present invention. Besides the electro-mechanical actuator assembly 1 and the brake lever 20, which is not visible in the given perspective, already previously described, the brake assembly 100' further comprises a brake caliper 60. In the exemplary embodiment, the brake caliper 60 is a floating caliper configured to be actuated by the brake lever 20 arranged between the electro-mechanical actuator assembly 1 and the brake caliper 60. The braking surfaces of the brake caliper 60 extend in a plane substantially perpendicular to the first longitudinal axis L1. Further, in the exemplary embodiment, the electro-mechanical actuator assembly 1 comprises two electronic control units 30a, 30b as control devices. The electronic control units 30a, 30b are attached to the housing 18 on opposed lateral sides of the housing 18. The lateral sides of the housing extend in planes laterally to a plane comprising the first longitudinal axis L1 and the second longitudinal axis L2. One electronic control unit 30a is a control unit configured to control operatively connected components of the electro-mechanical actuator assembly 1, and the other electronic control unit 30b is a power control unit configured to control a power supply to operatively connected components of the electro-mechanical actuator assembly 1. In the brake assembly 100' the electro-mechanical actuator assembly 1 is arranged such that the first longitudinal axis L1 and the second longitudinal axis L2 are oriented in a vertical plane.

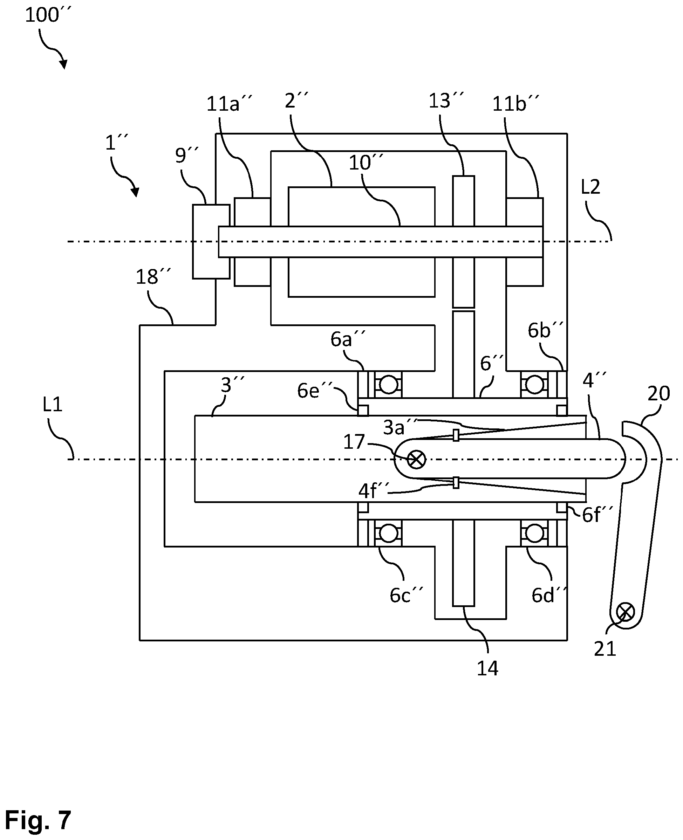

**Figure 7** shows a schematic cross-sectional lateral view of a brake assembly 100" and an electro-mechanical actuator assembly 1 " according to an exemplary embodiment of the present invention. The brake assembly 100" differs from the brake assembly 100 as per Fig. 1 in the spindle nut being rotationally driven instead of the spindle and the arrangement of a pushing member 4" partially inside a spindle 3".

Similar to the embodiment of Fig. 1, the electro-mechanical actuator assembly 1 comprises a spindle 3" and a spindle nut 6" configured as a recirculating ball spindle mechanism as an exemplary embodiment of an actuation mechanism configured to convert a rotational driving movement into a translational driven movement in a direction of a first longitudinal axis L1. The first longitudinal axis L1 corresponds to the longitudinal axis of the spindle 3". Here, the spindle nut 6" is driven by an electric motor 2" as driving device comprising a motor shaft 10" as driving device shaft. The motor shaft 10" extends in a direction along a second longitudinal axis L2. The first longitudinal axis L1 is parallel to the second longitudinal axis L2. Further, the motor shaft 10" and the spindle 3" respectively arranged in parallel to each other are positioned such that the shorter motor driving shaft 10'' does not extend with one end beyond the spindle 3" in at least one relative position to achieve a compact design in the direction of the first longitudinal axis L1 or the second longitudinal axis L2, respectively. In principle, for a compact design, the motor shaft 10" and the spindle 3" are preferably arranged to require minimum space in the direction of the first longitudinal axis L1 or the second longitudinal axis L2, respectively. To drive the spindle nut 6" by the electric motor 2", the motor shaft 10" comprises a drive gear 13" extending radially with respect to the second longitudinal axis L2, and the spindle nut 6" comprises a driven gear 14" extending radially with respect to the first longitudinal axis L1. The drive gear 13" and the driven gear 14" are positioned along the motor shaft 10" and the spindle nut 6", respectively, such that they are in engagement with each other to form a gear stage. In the exemplary embodiment, the gear stage is configured to convert the rotational speed of the motor shaft 10" in a lower rotational speed of the spindle nut 6".

The electric motor 2" and the motor shaft 10" are accommodated in a housing 18". The motor shaft 10" is rotationally supported in the housing 18" by motor shaft bearing 11 a", 11b", each of which is disposed on one end of the motor shaft 10". Further, the motor shaft 10" can be locked against a rotational movement by a bi-stable brake 9" as locking unit.

The spindle nut 6" is also accommodated in the housing 18", and rotationally supported by a spindle nut fixing bearing 6c" and a spindle nut loose bearing 6d". The spindle nut fixing bearing 6c" is configured to allow the spindle nut 6" to rotate but prevent the spindle nut 6" from an axial movement with respect to the first longitudinal axis L1. In the exemplary embodiment, the spindle nut loose bearing 6d" provides a further support to rotate the spindle nut 6" in a stable position.

Further, two radial seals 6a", 6b" are arranged circumferentially around the spindle 6. The radial seals 6a", 6b" are arranged at opposed ends of the spindle nut 6" in the direction of the first longitudinal axis L1 with the spindle nut fixing bearing 6c", the spindle nut loose bearing 6d", the driven gear 14", the drive gear 13", the motor shaft 10" and the electric motor 2" being sealed in a space of the housing therebetween. The spindle 3" is configured to be axially moved by the spindle nut 6" with respect to the first longitudinal axis L1. To prevent the spindle 3" from a rotational movement, the spindle nut comprises support pins (not shown) extending radially outward in opposing directions from the spindle 3" with respect to the first longitudinal axis L1. The support pins extend into respective guiding grooves (not shown) to guide the support pins and thereby the spindle 3" during an axial movement in the axial movement direction, while preventing the spindle 3" to rotate. Two wipers 6e", 6f" are arranged at opposed ends of the spindle nut 3" in the direction of the first longitudinal axis L1. Each of the two wipers 6e", 6f" extends circumferentially between an inner diameter of the spindle nut 6" and an outer diameter of the spindle 3".

The spindle 3" comprises a spindle recess 3a" in a conical shape. However, in other embodiments, the spindle recess 3a" may be of a different shape, e.g. in a shape of a triangular slit, or a rectangular volume. In the exemplary embodiment, the conical shape of the spindle recess 3a" provides an opening at the end of the spindle 3'' facing toward the brake lever 20, while the spindle recess 3a" is tapered toward the closed end portion facing away from the brake lever 20 in the direction of the first longitudinal axis L1. A pushing member 4" is partially received within the spindle recess 3a'', and affixed thereto by a fixing member 4f", here, a fixing O-ring. The pushing member 4" substantially extends in the direction of the first longitudinal axis L1 and is tiltable about a pivot axis 17, which extends substantially perpendicular to the first longitudinal axis L1 and in parallel to a pivot axis 21 of the brake lever 20. The pushing member 4'' provides a spherically shaped end portion at the end facing away from the brake lever 20. The spherically shaped end portion corresponds to the contour of the closed end portion of the spindle recess 3a". Accordingly, the pushing member 4" is affixed to spindle 3" within the spindle recess 3a" by the fixing member 4f", such that the pushing member 4'' is allowed to tilt about the pivot axis 17, wherein the spherically shaped end portion of the pushing member 4'' slides along the corresponding contour of the closed end portion of the spindle recess 3a" in a guided manner. The tilting movement of the pushing member 4" or the deflection from the first longitudinal axis L1 is restricted by the conical shaped circumferential wall of the spindle recess 3a" extending from the closed end portion to the opening of the spindle recess 3a".

For a braking operation, the electric motor 2'' drives the spindle nut 6'' via the motor shaft 10" and the gear stage 13", 14" to rotate. Accordingly, the spindle 3" is translationally moved in the direction of the first longitudinal axis L1 toward the brake lever 20. Accordingly, the pushing member 4" operatively coupled to the spindle 3" is moved toward the brake lever 20. The end of the pushing member 4'' facing the brake lever 20 engages with the brake lever 20, which is thereby rotated about the pivot axis 21 upon further movement of the pushing member 4" in the direction of the first longitudinal axis L1. The end of the pushing member 4" for engagement with the brake lever 20 provides a spherically shaped portion corresponding to a spherically shaped concave portion of the brake lever 20. Due to the brake lever 20 pivoting about the pivot axis 21 in response of being driven by the pushing member 4", the spherically shaped
concave portion of the brake lever 20 follows a curved trajectory. Since the pushing member 4" is tiltable about the pivot axis 17, the pushing member is allowed to follow the curved trajectory of the braking lever 20.

To reduce bending forces on the spindle 3", which may occur during a braking operation due to the engagement of the pushing member 4" with the brake lever 20 and respective reaction forces, the pushing member 4" and the pivot axis 17 of the pushing member 4", respectively, extends deeply into the spindle 3" in accordance with a respective length of the spindle recess 3a" in the direction of the first longitudinal axis L1. Further, to provide sufficient support of the spindle 3" with respect to occurring bending forces, the closed end portion of the spindle recess 3a" and the pivot axis 17 of the pushing member 4", respectively, are located, such there are moved between the spindle nut fixed bearing 6c" and the spindle nut loose bearing 6d" during a braking operation.

### LIST OF REFERENCE SIGNS

- 1, 1 ": electro-mechanical actuator assembly
- 2, 2": electric motor (driving device)
- 3, 3": spindle
- 3a": spindle recess
- 4, 4', 4": pushing member
- 4a, 4a': pushing member head
- 4b, 4b': pushing member body
- 4c, 4c': pushing member pivot portion
- 4d, 4d': pushing member opening
- 4e': spring member
- 4f": fixing member
- 5: guiding device
- 5a: first guiding device member
- 5b: second guiding device member
- 6, 6": spindle nut
- 6a",6b": radial seal
- 6c": spindle nut fixing bearing
- 6d": spindle nut loose bearing
- 6e", 6f": wiper
- 7a, 7b: support pin
- 8a, 8b: axial bearing
- 9, 9": bi-stable brake (locking unit)
- 10, 10": motor shaft (driving device shaft)
- 11a, 11b, 11a", 11b": motor shaft bearing
- 12: spindle bearing
- 13, 13": drive gear
- 14, 14": driven gear
- 15: spindle support bearing
- 16: spindle support bearing support
- 17: pivot axis
- 18, 18": housing
- 19: guiding groove
- 20: brake lever (brake actuator)
- 21: pivot axis
- 30a, 30b: electronic control unit (control device)
- 41c, 41c': pushing member pivot
- 42c: pushing member pivot recess
- 43c': pushing member abutment
- 51a: first guiding device member recess
- 51b: second guiding device member pivot
- 52b: second guiding device member abutment
- 60: brake caliper
- 100, 100', 100": brake assembly
- L1: first longitudinal axis
- L2: second longitudinal axis

## Claims

1. Electro-mechanical actuator assembly (1, 1") for actuating a brake actuator (20), comprising:
an actuation mechanism (3, 3", 6, 6") configured to convert a rotational driving movement into a translational driven movement in a direction of a first longitudinal axis (L1), and
a transfer mechanism (4, 4', 4", 5) operatively coupled to the actuation mechanism (3, 3", 6, 6") to receive and transfer the translational driven movement at least in the direction of the first longitudinal axis (L1),
wherein the transfer mechanism (4, 4', 4", 5) comprises at least one pushing member (4, 4', 4") being a push rod to be axially driven by the actuation mechanism in the direction of the first longitudinal axis (L1) to move the brake actuator (20) in a braking direction, the push rod having a pushing member body (4b, 4b') with one end comprising a pushing member pivot portion (4c, 4c') and an opposed end comprising a pushing member head (4a, 4a') configured to engage with a brake actuator (20) for a respective actuation of the brake actuator (20), wherein the pushing member pivot portion (4c, 4c') is configured to allow a tilting movement of the pushing member (4, 4', 4") about a pivot axis (17) inclined to the first longitudinal axis (L1), **characterized in that**
the transfer mechanism (4, 4', 5) comprises a guiding device (5) configured to at least partially receive and support the pushing member pivot portion (4c, 4c') and to translationally move the pushing member (4, 4') in accordance with the driven translational movement by the actuation mechanism (3, 6).

2. Electro-mechanical actuator assembly (1) according to claim 1, wherein the actuation mechanism (3, 6) is a spindle-spindle nut mechanism, preferably a recirculating ball spindle mechanism, wherein a spindle (3) of the spindle-spindle nut mechanism extends along the first longitudinal axis (L1) and is rotationally supported about the first longitudinal axis (L1) while being axially fixed, and wherein the spindle nut (6) is configured to be axially moveable with respect to the first longitudinal axis (L1) while being rotationally fixed, wherein the electro-mechanical actuator assembly (1) preferably further comprises an electro-mechanical linear actuator configured and controlled to lock the spindle (3) against a rotational movement.

3. Electro-mechanical actuator assembly (1) according to claim 2, wherein the spindle (3) is operatively connected to a driving device (2), preferably an electric motor, to be driven by the driving device (2) directly or via at least one gear stage (13, 14) arranged between the driving device (2) and the spindle (3).

4. Electro-mechanical actuator assembly (1) according to claim 3, wherein the driving device (2) comprises a driving device shaft (10) extending in a direction of a second longitudinal axis (L2), preferably in parallel to the first longitudinal axis (L1).

5. Electro-mechanical actuator assembly (1) according to claim 4, wherein the driving device shaft (10) at least partially overlaps the spindle (3) in the direction of the second longitudinal axis (L2).

6. Electro-mechanical actuator assembly (1) according to claim 4 or 5, wherein the electro-mechanical actuator assembly (1) further comprises a locking unit (9), preferably an electro-mechanical linear actuator or a locking clutch, more preferably a bi-stable brake, configured and controlled to lock the driving device shaft (10) against a rotational movement.

7. Electro-mechanical actuator assembly (1) according to any one of the preceding claims, wherein the guiding device (5) comprises at least one axial bearing (8a, 8b) arranged at a radial outer surface of the guiding device (5) and configured for a guided axial movement of the guiding device (5) with respect to the first longitudinal axis (L1).

8. Electro-mechanical actuator assembly (1, 1") according to any one of the preceding claims, wherein the pushing member (4, 4', 4") comprises a pushing member body (4b, 4b') with one end comprising the pushing member pivot portion (4c, 4c') and an opposed end comprising a pushing member head (4a, 4a') is an exchangeable and/or at least partially spherical pushing member head (4a, 4a').

9. Electro-mechanical actuator assembly (1, 1") according to any one of the preceding claims, wherein the pushing member pivot portion (4c, 4c') comprises at least one pushing member pivot (41c, 41c') configured as a cylinder portion (41c) and/or a spherical portion (41c').

10. Electro-mechanical actuator assembly (1) according to claim 9, wherein the guiding device (5) according to any one of the claims 1 to 8 and/or the spindle nut (6) according to claim 2 are/is configured to receive and support the at least one pushing member pivot (41c, 41c') for the tilting movement of the pushing member (4, 4').

11. Electro-mechanical actuator assembly (1) according to claim 9 or 10, wherein the guiding device (5) comprises a first guiding device member (5a) and a second guiding device member (5b), wherein the first guiding device member (5a) and the second guiding device member (5b) are connectable to each other to support the at least one pushing member pivot (41c, 41c') for the tilting movement of the pushing member (4, 4').

12. Electro-mechanical actuator assembly (1, 1") according to any one of the preceding claims, wherein the electro-mechanical actuator assembly (1) further comprises at least one control device (30a, 30b), preferably at least one electronic control unit.

13. Brake assembly (100, 100', 100"), comprising:
at least one electro-mechanical actuator assembly (1) according to any one of the preceding claims, and
at least one brake actuator (20) configured to actuate or release a brake upon being actuated by the electro-mechanical actuator assembly (1).

14. Vehicle comprising at least one electro-mechanical actuator assembly (1, 1") according to any one of the claims 1 to 12 and/or a brake assembly (100, 100', 100'') according to claim 13, wherein the vehicle is a commercial vehicle and/or an electrically powered or hybrid vehicle.

## Patentansprüche

1. Elektromechanische Betätigungsvorrichtungsbaugruppe (1, 1") zum Betätigen einer Bremsbetätigungsvorrichtung (20), umfassend:
einen Betätigungsmechanismus (3, 3", 6, 6"), der so ausgelegt ist, dass er eine drehende Antriebsbewegung in eine translatorische Abtriebsbewegung in Richtung einer ersten Längsachse (L1) umwandelt, und
einen Übertragungsmechanismus (4, 4', 4", 5), der wirkmäßig mit dem Betätigungsmechanismus (3, 3", 6, 6") gekoppelt ist, um die translatorische Abtriebsbewegung aufzunehmen und mindestens in Richtung der ersten Längsachse (L1) zu übertragen,
wobei der Übertragungsmechanismus (4, 4', 4", 5) mindestens ein Schiebeelement (4, 4', 4") umfasst, das eine Schubstange ist, um von dem Betätigungsmechanismus axial in Richtung der ersten Längsachse (L1) angetrieben zu werden, um die Bremsbetätigungsvorrichtung (20) in einer Bremsrichtung zu bewegen, wobei die Schubstange einen Schiebeelementkörper (4b, 4b') mit einem Ende, das einen Schiebeelementschwenkabschnitt (4c, 4c') umfasst, und einem gegenüberliegenden Ende aufweist, das einen Schiebeelementkopf (4a, 4a') umfasst, der so ausgelegt ist, dass er mit einer Bremsbetätigungsvorrichtung (20) für eine jeweilige Betätigung der Bremsbetätigungsvorrichtung (20) ineinandergreift, wobei der Schiebeelementschwenkabschnitt (4c, 4c') so ausgelegt ist, dass er eine Kippbewegung des Schiebeelements (4, 4', 4") um eine zur ersten Längsachse (L1) geneigte Schwenkachse (17) ermöglicht, **dadurch gekennzeichnet, dass**
der Übertragungsmechanismus (4, 4', 5) eine Führungsvorrichtung (5) umfasst, die so ausgelegt ist, dass sie den Schiebeelementschwenkabschnitt (4c, 4c') mindestens teilweise aufnimmt und stützt und das Schiebeelement (4, 4') in Übereinstimmung mit der translatorischen Abtriebsbewegung durch den Betätigungsmechanismus (3, 6) translatorisch bewegt.

2. Elektromechanische Betätigungsvorrichtungsbaugruppe (1) nach Anspruch 1, wobei der Betätigungsmechanismus (3, 6) ein Spindel-Spindelmutter-Mechanismus, vorzugsweise ein Kugelumlaufspindelmechanismus, ist, wobei sich eine Spindel (3) des Spindel-Spindelmutter-Mechanismus entlang der ersten Längsachse (L1) erstreckt und um die erste Längsachse (L1) drehbar gelagert ist, während sie in Axialrichtung fixiert ist, und wobei die Spindelmutter (6) so ausgelegt ist, dass sie in Bezug auf die erste Längsachse (L1) axial beweglich ist, während sie in Drehrichtung fixiert ist, wobei die elektromechanische Betätigungsvorrichtungsbaugruppe (1) vorzugsweise weiter eine elektromechanische Linearbetätigungsvorrichtung umfasst, die so ausgelegt ist und gesteuert wird, dass sie die Spindel (3) gegen eine Drehbewegung sperrt.

3. Elektromechanische Betätigungsvorrichtungsbaugruppe (1) nach Anspruch 2, wobei die Spindel (3) wirkmäßig mit einer Antriebsvorrichtung (2), vorzugsweise einem Elektromotor, verbunden ist, um von der Antriebsvorrichtung (2) direkt oder über mindestens eine Getriebestufe (13, 14), die zwischen der Antriebsvorrichtung (2) und der Spindel (3) angeordnet ist, angetrieben zu werden.

4. Elektromechanische Betätigungsvorrichtungsbaugruppe (1) nach Anspruch 3, wobei die Antriebsvorrichtung (2) eine Antriebsvorrichtungswelle (10) umfasst, die sich in Richtung einer zweiten Längsachse (L2), vorzugsweise parallel zur ersten Längsachse (L1), erstreckt.

5. Elektromechanische Betätigungsvorrichtungsbaugruppe (1) nach Anspruch 4, wobei die Antriebsvorrichtungswelle (10) die Spindel (3) in Richtung der zweiten Längsachse (L2) mindestens teilweise überlappt.

6. Elektromechanische Betätigungsvorrichtungsbaugruppe (1) nach Anspruch 4 oder 5, wobei die elektromechanische Betätigungsvorrichtungsbaugruppe (1) weiter eine Sperreinheit (9), vorzugsweise eine elektromechanische Linearbetätigungsvorrichtung oder eine Sperrkupplung, bevorzugter eine bistabile Bremse, umfasst, die so ausgelegt ist und gesteuert wird, dass sie die Antriebsvorrichtungswelle (10) gegen eine Drehbewegung sperrt.

7. Elektromechanische Betätigungsvorrichtungsbaugruppe (1) nach einem der vorstehenden Ansprüche, wobei die Führungsvorrichtung (5) mindestens ein Axiallager (8a, 8b) umfasst, das an einer radialen Außenfläche der Führungsvorrichtung (5) angeordnet und für eine geführte Axialbewegung der Führungsvorrichtung (5) in Bezug auf die erste Längsachse (L1) ausgelegt ist.

8. Elektromechanische Betätigungsvorrichtungsbaugruppe (1, 1") nach einem der vorstehenden Ansprüche, wobei das Schiebeelement (4, 4', 4") einen Schiebeelementkörper (4b, 4b') mit einem Ende, das den Schiebeelementschwenkabschnitt (4c, 4c') umfasst, und einem gegenüberliegenden Ende umfasst, das einen Schiebeelementkopf (4a, 4a') umfasst, der ein austauschbarer und/oder mindestens teilweise kugelförmiger Schiebeelementkopf (4a, 4a') ist.

9. Elektromechanische Betätigungsvorrichtungsbaugruppe (1, 1") nach einem der vorstehenden Ansprüche, wobei der Schiebeelementschwenkabschnitt (4c, 4c') mindestens einen Schiebeelementschwenkpunkt (41c, 41c') umfasst, der als Zylinderabschnitt (41c) und/oder kugelförmiger Abschnitt (41c') ausgelegt ist.

10. Elektromechanische Betätigungsvorrichtungsbaugruppe (1) nach Anspruch 9, wobei die Führungsvorrichtung (5) nach einem der Ansprüche 1 bis 8 und/oder die Spindelmutter (6) nach Anspruch 2 so ausgelegt ist/sind, dass sie den mindestens einen Schiebeelementschwenkpunkt (41c, 41c') für die Kippbewegung des Schiebeelements (4, 4') aufnimmt/aufnehmen und trägt/tragen.

11. Elektromechanische Betätigungsvorrichtungsbaugruppe (1) nach Anspruch 9 oder 10, wobei die Führungsvorrichtung (5) ein erstes Führungsvorrichtungselement (5a) und ein zweites Führungsvorrichtungselement (5b) umfasst, wobei das erste Führungsvorrichtungselement (5a) und das zweite Führungsvorrichtungselement (5b) miteinander verbunden werden können, um den mindestens einen Schiebeelementschwenkpunkt (41c, 41c') für die Kippbewegung des Schiebeelements (4, 4') zu tragen.

12. Elektromechanische Betätigungsvorrichtungsbaugruppe (1, 1") nach einem der vorstehenden Ansprüche, wobei die elektromechanische Betätigungsvorrichtungsbaugruppe (1) weiter mindestens eine Steuervorrichtung (30a, 30b), vorzugsweise mindestens eine elektronische Steuereinheit, umfasst.

13. Bremsbaugruppe (100, 100', 100"), umfassend:
mindestens eine elektromechanische Betätigungsvorrichtungsbaugruppe (1) nach einem der vorstehenden Ansprüche, und
mindestens eine Bremsbetätigungsvorrichtung (20), die so ausgelegt ist, dass sie eine Bremse betätigt oder löst, wenn sie durch die elektromechanische Betätigungsvorrichtungsbaugruppe (1) betätigt wird.

14. Fahrzeug, das mindestens eine elektromechanische Betätigungsvorrichtungsbaugruppe (1, 1") nach einem der Ansprüche 1 bis 12 und/oder eine Bremsbaugruppe (100, 100', 100") nach Anspruch 13 umfasst, wobei das Fahrzeug ein Nutzfahrzeug und/oder ein elektrisch betriebenes oder Hybridfahrzeug ist.

## Revendications

1. Ensemble actionneur électromécanique (1, 1") pour actionner un actionneur de frein (20), comprenant :
un mécanisme d'actionnement (3, 3", 6, 6") configuré pour convertir un mouvement d'entraînement rotatif en un mouvement d'entraînement de translation dans la direction d'un premier axe longitudinal (L1), et
un mécanisme de transfert (4, 4', 4", 5) couplé fonctionnellement au mécanisme d'actionnement (3, 3", 6, 6") pour recevoir et transférer le mouvement de translation au moins dans la direction du premier axe longitudinal (L1),
dans lequel le mécanisme de transfert (4, 4', 4", 5") comprend au moins un élément de poussée (4, 4', 4") constitué d'une tige de poussée entraînée axialement par le mécanisme d'actionnement dans la direction du premier axe longitudinal (L1) pour déplacer l'actionneur de frein (20) dans le sens du freinage. La tige de poussée comporte un corps d'élément de poussée (4b, 4b') dont une extrémité comprend une partie pivotante (4c, 4c') d'élément de poussée et l'autre extrémité comprend une tête d'élément de poussée (4a, 4a') configurée pour se mettre en prise avec un actionneur de frein (20) afin d'actionner ledit actionneur, dans lequel la partie pivotante de l'élément de poussée (4c, 4c') est configurée pour permettre un mouvement d'inclinaison de l'élément de poussée (4, 4', 4") autour d'un axe de pivotement (17) incliné par rapport au premier axe longitudinal (L1), **caractérisé en ce que**
le mécanisme de transfert (4, 4', 5) comprend un dispositif de guidage (5) configuré pour recevoir et supporter au moins partiellement la partie pivotante de l'élément de poussée (4c, 4c') et pour déplacer en translation l'élément de poussée (4, 4') conformément au mouvement de translation entraîné par le mécanisme d'actionnement (3, 6).

2. Ensemble d'actionneur électromécanique (1) selon la revendication 1, dans lequel le mécanisme d'actionnement (3, 6) est un mécanisme broche-écrou de broche, de préférence un mécanisme de broche à recirculation de billes, dans lequel une broche (3) du mécanisme broche-écrou de broche s'étend le long du premier axe longitudinal (L1) et est supportée en rotation autour du premier axe longitudinal (L1) tout en étant fixée axialement, et dans lequel l'écrou de broche (6) est configuré pour être mobile axialement par rapport au premier axe longitudinal (L1) tout en étant fixé en rotation, dans lequel l'ensemble d'actionneur électromécanique (1) comprend de préférence en outre un actionneur linéaire électromécanique configuré et commandé pour bloquer la broche (3) contre un mouvement de rotation.

3. Ensemble d'actionneur électromécanique (1) selon la revendication 2, dans lequel la broche (3) est fonctionnellement connectée à un dispositif d'entraînement (2), de préférence un moteur électrique, pour être entraînée par le dispositif d'entraînement (2) directement ou via au moins un étage d'engrenage (13, 14) disposé entre le dispositif d'entraînement (2) et la broche (3).

4. Ensemble d'actionneur électromécanique (1) selon la revendication 3, dans lequel le dispositif d'entraînement (2) comprend un arbre de dispositif d'entraînement (10) s'étendant dans la direction d'un deuxième axe longitudinal (L2), de préférence parallèle au premier axe longitudinal (L1).

5. Ensemble d'actionneur électromécanique (1) selon la revendication 4, dans lequel l'arbre du dispositif d'entraînement (10) chevauche au moins partiellement la broche (3) dans la direction du deuxième axe longitudinal (L2).

6. Ensemble d'actionneur électromécanique (1) selon la revendication 4 ou 5, dans lequel l'ensemble d'actionneur électromécanique (1) comprend en outre une unité de verrouillage (9), de préférence un actionneur linéaire électromécanique ou un embrayage de verrouillage, plus préférentiellement un frein bistable, configuré et commandé pour bloquer l'arbre du dispositif d'entraînement (10) contre un mouvement de rotation.

7. Ensemble d'actionneur électromécanique (1) selon l'une quelconque des revendications précédentes, dans lequel le dispositif de guidage (5) comprend au moins un palier axial (8a, 8b) disposé sur une surface extérieure radiale du dispositif de guidage (5) et configuré pour un mouvement axial guidé du dispositif de guidage (5) par rapport au premier axe longitudinal (L1).

8. Ensemble actionneur électromécanique (1, 1") selon l'une quelconque des revendications précédentes, dans lequel l'élément de poussée (4, 4', 4") comprend un corps d'élément de poussée (4b, 4b') dont une extrémité comprend la partie pivotante de l'élément de poussée (4c, 4c') et l'extrémité opposée comprenant une tête d'élément de poussée (4a, 4a') est une tête d'élément de poussée échangeable et/ou au moins partiellement sphérique (4a, 4a').

9. Ensemble actionneur électromécanique (1, 1") selon l'une quelconque des revendications précédentes, dans lequel la partie pivotante de l'élément de poussée (4c, 4c') comprend au moins un pivot d'élément de poussée (41 c, 41 c') configuré comme une partie cylindrique (41 c) et/ou une partie sphérique (41 c').

10. Ensemble actionneur électromécanique (1) selon la revendication 9, dans lequel le dispositif de guidage (5) est conforme à l'une quelconque des revendications 1 à 8 et/ou l'écrou de broche (6) selon la revendication 2 est/sont configuré(s) pour recevoir et supporter au moins un pivot de l'élément de poussée (41 c, 41 c') pour le mouvement d'inclinaison de l'élément de poussée (4, 4').

11. Ensemble d'actionneur électromécanique (1) selon la revendication 9 ou 10, dans lequel le dispositif de guidage (5) comprend un premier élément de dispositif de guidage (5a) et un deuxième élément de dispositif de guidage (5b), dans lequel le premier élément de dispositif de guidage (5a) et le deuxième élément de dispositif de guidage (5b) peuvent être connectés l'un à l'autre pour supporter au moins un pivot de l'élément de poussée (41 c, 41 c') pour le mouvement d'inclinaison de l'élément de poussée (4, 4').

12. Ensemble d'actionneur électromécanique (1, 1") selon l'une quelconque des revendications précédentes, dans lequel l'ensemble d'actionneur électromécanique (1) comprend en outre au moins un dispositif de commande (30a, 30b), de préférence au moins une unité de commande électronique.

13. Ensemble de freinage (100, 100', 100"), comprenant :
au moins un ensemble actionneur électromécanique (1) selon l'une quelconque des revendications précédentes, et
au moins un actionneur de frein (20) configuré pour actionner ou relâcher un frein lorsqu'il est actionné par l'ensemble d'actionneur électromécanique (1).

14. Véhicule comprenant au moins un ensemble actionneur électromécanique (1, 1") selon l'une quelconque des revendications 1 à 12 et/ou un ensemble de freinage (100, 100', 100") selon la revendication 13, dans lequel le véhicule est un véhicule commercial et/ou un véhicule électrique ou hybride.
